# EUROPEAN PATENT APPLICATION

(11) **EP 4 800 912 A1**
(43) Date of publication of application: **02.09.2026**
(21) Application number: 24214352.7
(22) Date of filing: 20.11.2024
(51) Int. Cl.: H02P 7/03, H02P 29/024

(54) **MOTOR DRIVE UNIT FOR AN ELECTRONIC DOOR ACTUATION ARRANGE-MENT OF A VEHICLE**

(71) Applicant: Kiekert AG, 42579 Heiligenhaus (DE)
(72) Inventor: MERLETTI, Marco, 21045 Gazzada Schianno (Varese) (IT); NARDI, Daniele, 22036 Erba (CO) (IT); GIARNETTI, Matteo, 21020 Bodio Lomnago (IT)
(74) Representative: Michalski Hüttermann & Partner mbB

(57) **Abstract**

The invention relates to a motor drive unit (1) for an electronic door actuation arrangement (2) of a vehicle (3), comprising an electric motor (4), a motor drive (5), a current-to-voltage converter (6), and a control unit (7), wherein
the control unit (7) is connected to the electric motor (4) via the interconnected motor drive (5) and adapted for driving the electric motor (4) via the motor drive (5),
the current-to-voltage converter (6) being connected between the motor drive (5) and the control unit (7) for converting a current applied to the motor drive (5) into a voltage proportional to the current and for transmitting the converted voltage to the control unit (7), and
the control unit (7) being further adapted for terminating the driving of the electric motor (4) upon exceeding a predetermined voltage limit value. In this way a motor drive unit for an electronic door actuation arrangement of a vehicle is provided, with which damage to the electric motor induced by a stall current can be avoided.

## Description

The invention relates to a motor drive unit for an electronic door actuation arrangement of a vehicle, comprising an electric motor, a motor drive, and a control unit, wherein the control unit is connected to the electric motor via the interconnected motor drive and adapted for driving the electric motor via the motor drive. The invention also relates to the electronic door actuation arrangement, the vehicle comprising the electronic door actuation arrangement. The use of the electronic door actuation arrangement on a door of the vehicle, and a method for operating the motor drive unit for an electronic door actuation arrangement of a vehicle.

### Background

Electronically actuated door latches, door openers, and door closers are increasingly being installed in vehicles to facilitate the opening, closing, unlocking, and locking of the vehicle's doors and tailgate. The electronically actuated door latch, often referred to as an eLatch, is unlocked and locked electronically. The electronically actuated door opener, also known as a presenter, is also electronically operated and is used to open the door. The electronically actuated door closer, also known as a cincher, closes the open door. These components are often integrated into one unit, forming a comprehensive electronic door actuation arrangement. The door can be opened and closed in different ways. For instance, some doors perform a pivoting movement, while others are designed as sliding doors that move in a linear direction. Such sliding doors can also be equipped with an automatic system to create an electronically actuated sliding door. In this context, electronically actuated door latches, door openers, and door closers are subsumed under the term "electronic door actuation arrangement".

All of these concepts are based on a drive concept motorized with electric motors. A motor drive unit comprises a motor drive, a control unit, and the electric motor. In addition to the above-mentioned areas of application for electric motors in a vehicle, they can also be found in electric window lifters or electrically adjustable exterior mirrors of the vehicle. The electronic door actuation arrangement can be formed in each door of the vehicle as well as the tailgate of the vehicle, for example.

However, a significant disadvantage of nowadays motor drive units is that if the electric motors are stalled, for example because an end point of a movement of the electric motor is reached or the movement is blocked by a blockage in the mechanism actuated by the electric motor, a stall current occurs in the electric motors that is so high that a permanent presence of this stall current damages the electric motor itself. This can lead to premature failure of the motor, requiring costly repairs or replacements, and can compromise the reliability and safety of the vehicle's electronic door actuation arrangement.

Furthermore, existing systems may lack efficient mechanisms to monitor and respond to such stall conditions promptly. Without timely intervention, the electric motors can overheat and suffer irreversible damage. This lack of robust monitoring and control mechanisms can result in reduced lifespan of the electric motors and increased maintenance costs. Additionally, unexpected electric motor failures can lead to inconvenient or unsafe situations for the vehicle occupants, particularly if the electronic door actuation arrangement fails to operate as intended.

It is therefore an objective of the present invention to provide a motor drive unit for an electronic door actuation arrangement of a vehicle, with which damage to the electric motor induced by a stall current can be avoided.

The object of the invention is solved by the features of the independent claims. Preferred implementations are detailed in the dependent claims.

Thus, a motor drive unit for an electronic door actuation arrangement of a vehicle is provided, comprising an electric motor, a motor drive, a current-to-voltage converter, and a control unit, wherein the control unit is connected to the electric motor via the interconnected motor drive and adapted for driving the electric motor via the motor drive, the current-to-voltage converter being connected between the motor drive and the control unit for converting a current applied to the motor drive into a voltage proportional to the current and for transmitting the converted voltage to the control unit, and the control unit being further adapted for terminating the driving of the electric motor upon exceeding a predetermined voltage limit value.

According to the invention, it is provided that the control unit is connected to the electric motor via the interconnected motor drive and adapted for driving the electric motor via the motor drive. The control unit drives the electric motor by a pulse width modulated signal via the motor drive. Thus, the control unit is connected to the motor drive in such a way that the electric motor is driven by the motor drive in response to a signal or trigger from the control unit. Furthermore, the motor drive is connected to the electric motor in such a way that a corresponding signal from the control unit causes the driven movement of the electric motor. One advantage of this is that precise control over the electric motor's operation is enabled, ensuring that it responds accurately to commands for actuating. This precise control helps maintain the smooth operation of the electronic door actuation arrangement.

The motor drive unit includes a current-to-voltage converter, which is connected between the motor drive and the control unit for converting a current applied to the motor drive into a voltage proportional to the current and for transmitting the converted voltage to the control unit. The current-to-voltage converter is a device that translates the current flowing through the motor drive into a corresponding voltage signal, which can then be interpreted by the control unit. One advantage of this converter is that it provides a reliable and accurate means of monitoring the current applied to the electric motor. This monitoring capability is essential for detecting abnormal operating conditions, such as excessive current that could indicate a stall condition in the electric motor.

Converting the current into a voltage with the current-to-voltage converter allows the control unit to easily monitor and interpret the electric motor's operating conditions using voltage measurement techniques. Voltage signals are more straightforward to process and analyze than current signals, which simplifies the design and implementation of the motor drive unit according to the invention. This arrangement enhances the accuracy of detecting stall currents, enabling precise detection of variations in the current applied to the electric motor, respectively the electric motors current draw, which can indicate different operating states or potential issues like a stall condition. By converting the current to a voltage, the system can leverage high-precision voltage measurement components, ensuring reliable and accurate feedback.

The real-time monitoring capability provided by this arrangement ensures that the control unit receives continuous feedback on the motor's performance. This enables dynamic adjustments and immediate responses to changing conditions, maintaining operation of the electric motor and preventing failures. The voltage signal's compatibility with control units, e.g. microcontrollers, also simplifies the system design, reducing the need for specialized components and enhancing integration with existing electronic door actuation arrangements.

The control unit is further adapted for terminating the driving of the electric motor upon exceeding a predetermined voltage limit value. This aspect means that the control unit is adapted to stop the electric motor if the voltage signal from the current-to-voltage converter exceeds a certain threshold, the predetermined voltage limit value, which corresponds to an excessive current indicative of a blocked electric motor leading to a stall current occurring within the electric motor. One advantage of this feature is that it helps prevent damage to the electric motor by promptly halting its operation before the stall current can cause overheating or other harm. This protective measure enhances the durability and safety of the electronic door actuation arrangement, ensuring that the electric motor does not sustain damage due to prolonged exposure to high current levels.

Thus, predetermined voltage limit values corresponding to safe operating currents can be set within the control unit, allowing it to promptly terminate the driving of the electric motor if these predetermined voltage limit values are exceeded.

By incorporating these elements, the motor drive unit according to the invention provides an operation of the electric motor preventing stall currents being applied to the electric motor, thereby preventing damage caused by these stall currents. This arrangement ensures the longevity and reliability of the electric motor, reduces maintenance costs, and enhances the overall safety and performance of the motor drive unit.

In principle, various predetermined voltage limit values can be provided. According to an embodiment of the invention, however, the control unit is adapted for terminating the driving of the electric motor upon exceeding the predetermined voltage limit value corresponding to a stall current of the electric motor. The stall current is an abnormally high current that occurs when the electric motor encounters an obstacle or reaches the end of its mechanical travel, e.g., an endpoint. One advantage of this arrangement is that it prevents the electric motor from sustaining damage due to excessive current draw, thereby enhancing the durability and reliability of the motor drive unit.

In general, the driving of the electric motor can be terminated as soon as the predetermined voltage limit is reached. According to an embodiment of the invention, however, the control unit is adapted for terminating the driving of the electric motor upon exceeding the predetermined voltage limit value for a predetermined time duration. This arrangement ensures that transient spikes in current, which might not necessarily indicate a stall condition, do not cause unnecessary shutdowns of the electric motor. One advantage is that it provides a balance between protecting the motor and ensuring smooth operation by only terminating the motor drive if the high current persists beyond the predetermined time duration.

It is possible to configure the motor drive in different ways. According to an embodiment of the invention, however, the motor drive comprises two half-bridges, each half-bridge comprising two switches arranged in series thereby forming a midpoint, wherein the electric motor is connected between the midpoints, and each half-bridge is connected to the current-to-voltage converter. The half-bridge configuration is an efficient way to drive electric motors, allowing precise control of the motor's speed and direction of rotation. One advantage of this arrangement is that it enables efficient and flexible motor control and, in addition, terminating the driving of the electric motor regardless of the direction of rotation of the same, as the current-to-voltage converter is connected to each half-bridge.

In principle, the switches can be designed in different ways. According to an embodiment of the invention, however, the switches are field-effect transistors. Field-effect transistors are semiconductor devices that can switch and amplify electrical signals efficiently. One advantage of using field-effect transistors in this arrangement is that they offer low resistance when turned on, leading to reduced power losses and improved efficiency in the motor drive unit.

According to an embodiment of the invention, the motor drive unit comprises a plurality of electric motors, a plurality of motor drives, and a plurality of current-to-voltage converters corresponding to the plurality of motor drives, such that the control unit can terminate the driving of each electric motor of the plurality of electric motors individually upon exceeding the predetermined voltage limit value. An actual number of motor drives corresponds to a number of current-to-voltage converters. Each current-to-voltage converter is connected to the control unit accordingly. This allows for independent control and protection of multiple electric motors within the motor drive unit. One advantage is that it enhances the flexibility and robustness of the motor drive unit, ensuring that the driving of each electric motor can be terminated separately.

Various control units can be used in general. According to an embodiment of the invention, however, the control unit is a microcontroller or a field programmable gate array. The microcontroller is a compact integrated circuit designed to govern a specific operation in an embedded system, while the field programmable gate array is a semiconductor device that can be configured by the user after manufacturing. One advantage of using a microcontroller or a field programmable gate array is that they provide the necessary processing power and flexibility to implement complex control algorithms, ensuring precise and efficient control of the electric motor drive unit.

In principle, various current-to-voltage converters can be employed. According to an embodiment of the invention, however, the current-to-voltage converter comprises a shunt resistor or a transimpedance amplifier. The shunt resistor is a device used to measure electric current by providing a low-resistance path for the current to flow through. As the current passes through the shunt resistor, it generates a voltage drop proportional to the current. This voltage drop is then measured by the control unit and used as an indication of the current flowing through the motor drive. An advantage of the shunt resistor is the simplicity that implies low susceptibility to errors.

The transimpedance amplifier comprises an operational amplifier and a feedback resistor. The feedback resistor converts the current applied to the electric motor into a corresponding voltage, which is proportional to the current. The operational amplifier comprises a high input impedance, ensuring minimal current loss and thus making the transimpedance amplifier highly efficient and precise. One advantage of these components is that they provide accurate and reliable current measurement, which is beneficial for the protection of the electric motor.

The invention further concerns an electronic door actuation system of a vehicle comprising at least one motor drive unit according to the above.

Further, the invention relates to the use of the electronic door actuation arrangement as described above on a door of the vehicle.

The invention further relates to a vehicle with a plurality of electronic door actuation systems as described, wherein the control units of the motor drive units are combined in a central control unit arranged in the vehicle. This central control unit can coordinate the operation of the plurality of motor drive units, providing synchronized control and monitoring. One advantage of this centralized approach is that it simplifies an overall system architecture of the vehicle and can improve the coordination and efficiency of the electronic door actuation arrangements, respectively the motor drive units within the electronic door actuation arrangements.

Also, the invention concerns a method for operating a motor drive unit for an electronic door actuation arrangement of a vehicle, with an electric motor, comprising the following method steps:
driving the electric motor,
acquiring a current at the electric motor,
converting the current into a voltage proportional to the current, and
terminating the driving of the electric motor upon exceeding a predetermined voltage limit value.

According to an embodiment of the invention, the predetermined voltage limit value is larger than a start voltage value at a starting torque of the electric motor. This arrangement ensures that the control unit does not prematurely terminate the driving of the electric motor during the initial start-up phase when the motor naturally draws higher current. One advantage is that it allows for normal operation without false triggering of the protection mechanism.

In principle, the current can be converted in discrete time intervals and sent to the control unit. According to a further embodiment of the invention, however, it is provided that the current is converted and transmitted to the control unit continuously.

Further, according to an embodiment of the invention, the predetermined voltage limit value corresponds to a stall current of the electric motor. This specific voltage limit ensures that the motor is protected from damage due to stall conditions, as the control unit will terminate the electric motor drive if this current level is detected. One advantage is that it provides a clear and effective protection mechanism for the electric motor.

According to another embodiment of the invention, the driving of the electric motor is terminated upon exceeding the predetermined voltage limit value for a predetermined time duration. This method further ensures, that the start voltage value at the starting torque does not cause the termination of the electric motor driving.

In general, different predetermined time durations can be provided. According to an embodiment of the invention, the predetermined time duration is 10 ms. This predetermined time duration is sufficient to filter out transient spikes and focus on sustained overcurrent conditions, ensuring that the electric motor is protected without unnecessary interruptions.

Further implementations and advantages of the method can be derived by the person skilled in the art from the motor drive unit for an electronic door actuation arrangement of a vehicle as described before.

### Brief description of drawings

These and other aspects of the invention will be apparent from and elucidated with reference to the implementation described hereinafter.

In the drawings:
- Fig. 1: schematically depicts a motor drive unit according to a preferred embodiment of the invention,
- Fig. 2: schematically depicts another motor drive unit according to a preferred embodiment of the invention, and
- Fig. 3: schematically depicts a vehicle with a plurality of electronic door actuation arrangements according to a preferred embodiment of the invention.

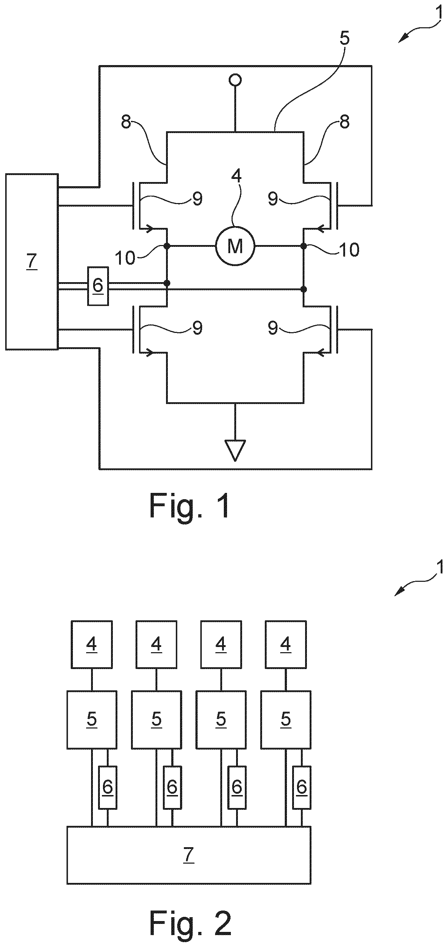

Fig. 1 now depicts a motor drive unit 1 for an electronic door actuation arrangement 2 of a vehicle 3 according to a preferred embodiment of the invention. The motor drive unit 1 comprises an electric motor 4, a motor drive 5, a current-to-voltage converter 6, and a control unit 7.

The motor drive 5 comprises two half-bridges 8. Each half-bridges 8 comprises two switches 9 arranged in series and thereby forming a midpoint 10 in each half-bridge 8. The electric motor 4 is interconnected between the two half-bridges 8 via the midpoints 10. Each half-bridge 8 is connected to the current-to-voltage converter 6.

The control unit 7 is connected to the electric motor 4 via the interconnected motor drive 5, respectively the switches 9 of the half-bridges 8, and adapted for driving the electric motor 4 via the motor drive 5 by pulse width modulation. The switches 9 are field-effect transistors and the control unit 7 is connected to a gate terminal of each field-effect transistor, such that by sending a signal or trigger to the gate terminal the switches 9 become conductive thereby allowing a current flowing from a voltage source to the electric motor 4 or from the electric motor 4 to a ground potential. The control unit 7 is furthermore connected to the current-to-voltage converter 6, such that the current applied to each half-bridge 8 is converted into a proportional voltage and then transmitted to the control unit 7 by the current-to-voltage converter 6. In this embodiment, the control unit 7 is a microcontroller and the current-to-voltage converter 6 is a transimpedance amplifier.

The control unit 7 is adapted for terminating the driving of the electric motor 4 upon exceeding the predetermined voltage limit value corresponding to a voltage larger than a start voltage value at a starting torque of the electric motor 4 for a predetermined time duration of 10 ms.

Fig. 2 schematically depicts another motor drive unit 1 according to a preferred embodiment of the invention. The motor drive unit 1 comprises a plurality of electric motors 4, a plurality of motor drives 5 and a plurality of current-to-voltage converters 6 corresponding to the plurality of motor drives 5. In this way the voltage of each current-to-voltage converter 6 is acquired separately with the control unit 7. If a current corresponding to the predetermined voltage limit value is applied to one of the motor drives 5, the driving of the electric motor 4 belonging to the motor drive 5 is terminated.

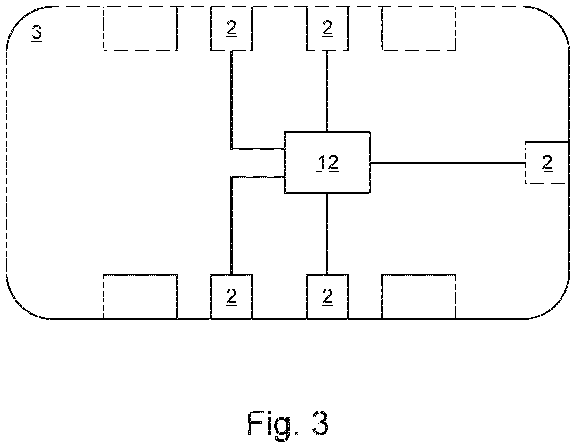

Fig. 3 schematically depicts the vehicle 3 with a plurality of electronic door actuation arrangements 2 according to a preferred embodiment of the invention. Each electronic door actuation arrangement 2 comprises one motor drive unit 1. The control units 7 of each motor drive unit 1 are combined in a central control unit 12 arranged in the vehicle 3.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### List of reference symbols

- 1: Motor drive unit
- 2: electronic door actuation arrangement
- 3: vehicle
- 4: electric motor
- 5: motor drive
- 6: current-to-voltage converter
- 7: control unit
- 8: half-bridge
- 9: switch
- 10: midpoint
- 12: central control unit

## Claims

1. Motor drive unit (1) for an electronic door actuation arrangement (2) of a vehicle (3), comprising an electric motor (4), a motor drive (5), a current-to-voltage converter (6), and a control unit (7), wherein
the control unit (7) is connected to the electric motor (4) via the interconnected motor drive (5) and adapted for driving the electric motor (4) via the motor drive (5),
the current-to-voltage converter (6) being connected between the motor drive (5) and the control unit (7) for converting a current applied to the motor drive (5) into a voltage proportional to the current and for transmitting the converted voltage to the control unit (7), and
the control unit (7) being further adapted for terminating the driving of the electric motor (4) upon exceeding a predetermined voltage limit value.

2. Motor drive unit (1) according to the previous claim, wherein the control unit (7) is adapted for terminating the driving of the electric motor (4) upon exceeding the predetermined voltage limit value corresponding to a stall current of the electric motor (4).

3. Motor drive unit (1) according to any one of the previous two claims, wherein the control unit (7) is adapted for terminating the driving of the electric motor (4) upon exceeding the predetermined voltage limit value for a predetermined time duration.

4. Motor drive unit (1) according to any one of the previous claims, wherein the motor drive (5) comprises two half-bridges (8),
each half-bridge (8) comprising two switches (9) arranged in series thereby forming a midpoint (10), wherein
the electric motor (4) is connected between the midpoints (10), and
each half-bridge (8) is connected to the current-to-voltage converter (6).

5. Motor drive unit (1) according to any one of the previous claims with a plurality of electric motors (4), a plurality of motor drives (5) and a plurality of current-to-voltage converters (6) corresponding to the plurality of motor drives (5), such that the control unit (7) can terminate the driving of each electric motor (4) of the plurality of electric motors (4) individually upon exceeding the predetermined voltage limit value.

6. Motor drive unit (1) according to any one of the previous claims, wherein the control unit (7) is a microcontroller or a field programmable gate array.

7. Motor drive unit (1) according to any one of the previous claims, wherein the current-to-voltage converter (6) comprises a shunt resistor or a transimpedance amplifier.

8. Electronic door actuation arrangement (2) of a vehicle (3) comprising at least one motor drive unit (1) according to any one of the previous claims.

9. Use of the electronic door actuation arrangement (2) according to the previous claim on a door of a vehicle (3).

10. Vehicle (3) with a plurality of electronic door actuation arrangements (2) according to claim 8, wherein the control units (7) of the motor drive units (1) are combined in a central control unit (12) arranged in the vehicle (3).

11. Method for operating a motor drive unit (1) for an electronic door actuation arrangement (2) of a vehicle (3), with an electric motor (4), comprising the following method steps:
driving the electric motor (4),
acquiring a current at the electric motor (4),
converting the current into a voltage proportional to the current, and
terminating the driving of the electric motor (4) upon exceeding a predetermined voltage limit value.

12. Method according to the previous claim, wherein the predetermined voltage limit value is larger than a start voltage value at a starting torque of the electric motor (4).

13. Method according to any one of the previous two claims, wherein the predetermined voltage limit value corresponds to a stall current of the electric motor (4).

14. Method according to any one of the previous three claims, wherein in the last step the driving of the electric motor (4) is terminated upon exceeding the predetermined voltage limit value for a predetermined time duration.

15. Method according to the previous claim, wherein the predetermined time duration is 10 ms.
